# EUROPÄISCHE PATENTSCHRIFT

(11) **EP 1 154 920 B1**
(45) Veröffentlichungstag und Bekanntmachung des Hinweises auf die Patenterteilung: **17.07.2002**
(21) Anmeldenummer: 99917760.3
(22) Anmeldetag: 02.03.1999
(51) Int. Cl.: B60T 8/36, B60T 8/40, H02K 11/04

(54) **MOTOR-ANTRIEBS-AGGREGAT, INSBESONDERE MOTOR-PUMPEN-AGGREGAT FÜR EINE KRAFTFAHRZEUG-ANTIBLOCKIER-BREMSVORRICHTUNG**
MOTOR-DRIVE ASSEMBLY, ESPECIALLY A MOTOR-PUMP ASSEMBLY FOR AN ANTI-BLOCKING BRAKE DEVICE OF AN AUTOMOBILE
ENSEMBLE MOTEUR-ORGANE D'ENTRAINEMENT, NOTAMMENT ENSEMBLE MOTEUR-POMPE POUR UN DISPOSITIF ANTIBLOCAGE DE VEHICULE AUTOMOBILE

(43) Veröffentlichungstag der Anmeldung: 21.11.2001
(73) Patentinhaber: SIEMENS AKTIENGESELLSCHAFT, 80333 München (DE)
(72) Erfinder: HEIM, Norbert, D-97228 Rottendorf (DE); REINHOLD, Andreas, D-97337 Dettelbach (DE); STEEGMÜLLER, Horst, D-97076 Würzburg (DE)
(86) Internationale Anmeldenummer: DE9900549
(87) Internationale Veröffentlichungsnummer: WO0051863

(56) Entgegenhaltungen:
- EP-A- 0 593 913
- EP-B- 0 645 875
- WO-A-93/00513
- DE-A- 4 235 962
- DE-A- 19 626 213
- DE-C- 19 518 518
- DE-U- 9 415 935
- DE-U- 29 712 033
- GB-A- 2 028 006
- US-A- 5 119 466

## Beschreibung

Die Erfindung bezieht sich auf ein Motor-Antriebs-Aggregat, insbesondere Motor-Pumpen-Aggregat für eine Kraftfahrzeug-Antiblockier-Bremsvorrichtung, gemäß Anspruch 1.

Motor-Antriebs-Aggregate für Antiblockier-Bremsvorrichtungen mit einem Elektromotor und einem an diesem stirnseitig anliegenden Pumpengehäuse sind z.B. durch die EP 0 645 875 B1 bzw. die DE 42 35 962 A1 bekannt. Im Falle der erstgenannten EP 0 645 875 B1 ist u.a. eine Regel- bzw. Steuerschaltung einschließlich ihrer leistungsintensiven Schaltungs-Bauteile in einem Elektronik-Gehäuse an der dem Elektromotor abgewandten Stirnseite des Pumpengehäuses untergebracht, wobei eine die elektronischen Bauteile der Regel- bzw. Steuerschaltung aufnehmende Schaltplatine in größerem axialen Abstand zu dem Pumpengehäuse angeordnet ist. Durch die zweitgenannte DE 42 35 962 A1 ist es u.a. bekannt, den pumpengehäuseseitigen Lagerschild als Bürstentragplatte eines als Elektromotor vorgesehenen Kommutatormotors auszubilden.

Durch die DE-U-297 12 033 ist ein Motor-Pumpen-Aggregat mit den ersten drei Teilmerkmalen des Anspruchs 1 bekannt; die Leistungskomponente ist dort an der dem Motorgehäuse zugewandten Seite der Bürstentragplatte angeordnet und steht über eine axiale Öffnung in der Bürstentragplatte in mittelbarer bzw. unmittelbarer Wärmeleitverbindung mit dem benachbarten Pumpengehäuse, das derart als thermische Senke für die Leistungskomponente wirkt.

Gemäß Aufgabe vorliegender Erfindung soll bei einfacher Fertigungstechnik und insbesondere bei kompakter sowie betriebssicherer Bauweise ein gegen betriebsmäßige Wärmebelastung unempfindliches elektronisch regelbares bzw. steuerbares Motor-Antriebs-Aggregat, insbesondere Motor-Pumpen-Aggregat, geschaffen werden.

Die Lösung dieser Aufgabe gelingt erfindungsgemäß durch ein Motor-Antriebs-Aggregat gemäß Anspruch 1; vorteilhafte Ausgestaltungen der Erfindung sind jeweils Gegenstand der Unteransprüche.

Durch die gesonderte Verlegung der wärmeintensiven Leistungskomponente als Teil der für die Steuerung bzw. Regelung des Motor-Antriebs-Aggregats vorgesehenen elektronischen Regelbzw. Steuerschaltung an einen Standort mit wärmeleitender Verbindung zu dem an sich vorhandenen, als Kühlkörper mitverwendbaren Antriebsgehäuse, insbesondere Pumpengehäuses, kann auf einen gesonderten Kühlkörper für die Leistungskomponente, insbesondere den Leistungstransistor, als integrierter Teil der Regel- bzw. Steuerschaltung verzichtet werden, wobei durch die motorabgewandte Aufnahme der Leistungskomponente auf der Bürstentragplatte auf einfache Weise eine hermetische Abdichtung gegen den Motorinnenraum und ein sicherer Schutz gegen Schmiermittel- bzw. Bürstenstaubverschmutzung gewährbar ist.

Die Leistungskomponente ist zweckmäßigerweise mit einem Stanzgitter kontaktiert und mechanisch fixiert, das in die Bürstentragplatte in einer Ebene zwischen der Leistungskomponente und dem Motorinnenraum eingespritzt ist. Das Stanzgitter dient nicht nur der Verbindung der Leistungskomponente zu der übrigen Steuer- und Regelschaltung sondern auch zur Versorgung der auf der motorinneren Seite der Bürstentragplatte gehaltenen bzw. geführten Bürsten des Kommutatormotors.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: ein erfindungsgemäßes Motor-Pumpen-Aggregat mit auf einem als Bürstentragplatte ausgebildeten Lagerschild eines Kommutatormotors örtlich entfernt von den übrigen Teilen der Regel- bzw. Steuerschaltung stirnseitig motoraußen angeordneter Leistungskomponente;
- FIG 2: das Motor-Antriebs-Aggregat gemäß FIG 1 in einer vorbekannten Ausführung (siehe z.B. die DE-U-297 12 033) mit auf einer Bürstentragplatte stirnseitig motorinnen angeordneter Leistungskomponente;
- FIG 3: in Ausschnittvergrößerung aus PIG 1 die unmittelbare Anlage der Grundfläche der Leistungskomponente an dem Pumpengehäuse des Motor-Pumpen-Aggregats;
- FIG 4: in Ergänzung von FIG 3 eine Zwischenlage einer Wärmeleitfolie zwischen der Leistungskomponente und dem Pumpengehäuse.

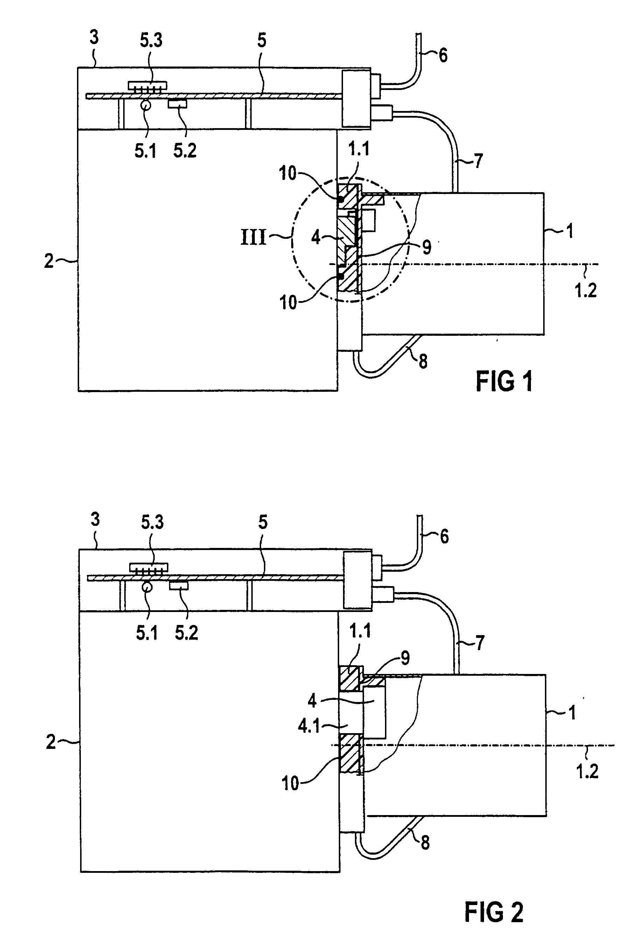

FIG 2 zeigt die bekannte Ausführung eines Motor-Pumpen-Aggregats für eine Kraftfahrzeug-Antiblockier-Bremsvorrichtung mit einem Motorgehäuse 1 eines Kommutatormotors und mit einem an dessen linker Stirnseite, vorzugsweise gegenseitig dichtend, anliegenden Pumpengehäuse 2 einer von dem Kommutatormotor angetriebenen Hydraulikpumpe. Die linke Stirnseite des Motorgehäuses 1 ist von einem die Motor-Antriebsrotorwelle 1.2 aufnehmenden Lagerschild abgeschlossen, das gleichzeitig als Bürstentragplatte 1.1 des Kommutatormotors ausgebildet ist; die Bürstentragplatte 1.1 ist üblicherweise als Kunststoffteil gefertigt.

Am mantelseitigen Außenumfang des Pumpengehäuses 2 ist ein Elektronikgehäuse 3 angeordnet, innerhalb dessen eine Schaltplatine 5 einer Steuer- bzw. Regelschaltung gehaltert ist, die auf ihrer radialen Außenseite leistungsschwache elektronische Bauteile 5.1-5.3 aufnimmt; als Bestandteil der Steuerbzw. Regelschaltung ist weiterhin eine Leistungskomponente in Form eines Leistungstransistors 4 örtlich entfernt motorinnen auf der Bürstentragplatte 1.1 des Kommutatormotors 1 angeordnet bzw. angeschlossen und im Sinne einer besseren Entwärmung durch eine stirnseitige Öffnung in der Bürstentragplatte 1.1 über ein Wärmeleitstück 4.1 in wärmeleitender Verbindung zu dem Pumpengehäuse 2 gestellt.

FIG 1 zeigt das erfindungsgemäße Motor-Pumpen-Aggregat, bei dem die Leistungskomponente, im vorliegenden Beispiel in Form des Leistungstransistors 4, ebenfalls örtlich getrennt von den in dem Elektronikgehäuse 3 verbleibenden leistungsschwachen elektronischen Bauteilen 5.1-5.3 jedoch nunmehr auf der dem Motorinneren des Kommutatormotors 1 abgewandten Seite der Bürstentragplatte 1.1, vorzugsweise in einer zur Stirnseite des Pumpengehäuses 2 offenen Ausnehmung 1.11, aufgenommen und durch die Bürstentragplatte 1.1 hermetisch gegen den Motorinnenraum des Motorgehäuses 1 abgedichtet ist.

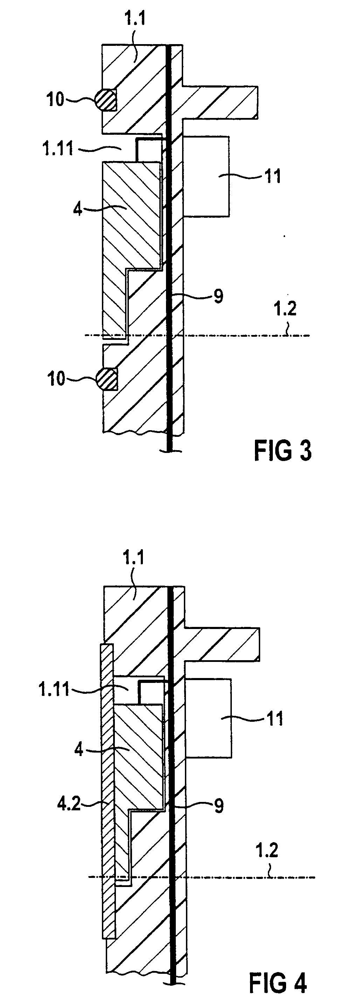

Die freie Grundfläche des zum Motorinnenraum des Kommutatormotors durch die Bürstentragplatte 1.1 abgedeckten Leistungstransistors 4 ist gemäß FIG 3 in unmittelbare bzw. gemäß FIG 4 unter Zwischenlage einer Wärmeleitfolie 4.2 in mittelbare Berührung mit der thermischen Senke des Pumpengehäuses 2 gebracht.

Zur Abdichtung gegen das Eindringen von pumpengehäuseseitiger Leckflüssigkeit bzw. äußerer Feuchtigkeit ist zwischen dem Motorgehäuse 1 und dem Pumpengehäuse 2 eine den Leistungstransistor 4 entsprechend umrandende, vorzugsweise an der Bürstentragplatte 1.1 fixierbare, Dichtung 10 vorgesehen. Gemäß einer alternativen Ausgestaltung der Erfindung ist die Wärmeleitfolie 4.2 - wie aus FIG 4 ersichtlich - randseitig über die gekühlte Grundfläche des Leistungstransistors 4 und somit über die Öffnung der Ausnehmung 1.11 derart ausgedehnt, daß sie als Dichtung zwischen den voreinanderliegenden Stirnflächen von Pumpengehäuse 2 und Bürstentragplatte 1.1 festdrückbar ist.

Wie insbesondere aus den vergrößerten Detailausschnitten gemäß FIG 3;4 ersichtlich, ist in einer Ebene zwischen der den Leistungstransistor 4 aufnehmenden motorfernen Stirnfläche der Bürstentragplatte 1.1 einerseits und der die Bürstenkästen 11 aufnehmenden motornahen Stirnfläche der Bürstentragplatte 1.1 andererseits ein Stanzgitter 9 eingespritzt, das der Kontaktierung und gegebenenfalls auch Fixierung des Leistungstransistors 4 sowie auch der Stromversorgung von hier nicht dargestellten Bürsten in den Bürstenkästen 11 dient.

Die nunmehr von dem Leistungstransistor 4 befreite Schaltplatine 5 ist vorteilhaft beidseitig mit leistungsschwächeren elektronischen Bauteilen 5.1-5.3 bestückbar, so daß entweder eine komfortablere Regel- bzw. Steuerschaltung installierbar oder der Bauraum für das Elektronikgehäuse 3 verkleinerbar ist.

In für die vorliegende Erfindung nicht bestimmender Weise sind zum gegenseitigen elektrischen Anschluß äußere Anschlußleitungen 6, Regel- bzw. Steuerleitungen 7 bzw. Motor-Stromversorgungsleitungen 8 vorgesehen.

## Patentansprüche

1. Motor-Antriebs-Aggregat, insbesondere Motor-Pumpen-Aggregat für eine Kraftfahrzeug-Antiblockier-Bremsvorrichtung, enthaltend ein Motorgehäuse (1) eines Kommutatormotors, ein Antriebsgehäuse, insbesondere Pumpengehäuse (2), und eine Regel- bzw. Steuerschaltung (4;5.1-5.3) mit zumindest einer Leistungskomponente, insbesondere einem Leistungstransistor (4), mit den Merkmalen:
- Die Leistungskomponente, insbesondere der Leistungstransistor (4), ist örtlich getrennt von der übrigen Regelbzw. Steuerschaltung (5.1-5.3) gut wärmeleitend und in Nähe zu dem Antriebsgehäuse (2) angeordnet;
- das Motorgehäuse (1) liegt mit einem Lagerschild dicht an dem Antriebsgehäuse (2) an;
- der Lagerschild ist als Bürstentragplatte (1.1) des Kommutatormotors ausgebildet;
- die Leistungskomponente, insbesondere der Leistungstransistor (4), ist an der dem Antriebsgehäuse (2) zugewandten Seite der Bürstentragplatte (1.1) mit ihrer Grundfläche in unmittelbare bzw. mittelbare wärmeleitende Verbindung mit dem Antriebsgehäuse gestellt und ansonsten im Sinne einer gedichteten Trennung zum Innenraum des Motorgehäuses (1) von der Bürstentragplatte (1.1) umschlossen.

2. Motor-Antriebs-Aggregat nach Anspruch 1 mit dem Merkmal:
- Als Antriebsgehäuse ist ein Pumpengehäuse (2) eines Motor-Pumpen-Aggregats einer Kraftfahrzeug-Antiblockier-Bremsvorrichtung vorgesehen.

3. Motor-Antriebs-Aggregat nach Anspruch 1 und/oder 2 mit dem Merkmal:
- Die Leistungskomponente, insbesondere der Leistungstransistor (4), liegt mit seiner Grundfläche unmittelbar an dem Antriebsgehäuse (2) an.

4. Motor-Antriebs-Aggregat nach Anspruch 1 und/oder 2 mit dem Merkmal:
- Die Leistungskomponente, insbesondere der Leistungstransistor (4), liegt mit seiner Grundfläche mittelbar an dem Antriebsgehäuse (2) an.

5. Motor-Antriebs-Aggregat nach Anspruch 4 mit dem Merkmal:
- Die Leistungskomponente, insbesondere der Leistungstransistor (4), liegt unter Zwischenlage einer Wärmeleitfolie (4.2) oder dergleichen an dem Antriebsgehäuse (2) an.

6. Motor-Antriebs-Aggregat nach zumindest einem der Ansprüche 1-5 mit dem Merkmal:
- Die Leistungskomponente, insbesondere der Leistungstransistor (4), ist außenrandseitig durch zumindest eine Dichtung (10), insbesondere gegen das Eindringen von Feuchtigkeit und Leckflüssigkeit, abgedichtet.

7. Motor-Antriebs-Aggregat nach Anspruch 5 mit dem Merkmal:
- Die Wärmeleitfolie (4.2) ist gleichzeitig als Dichtung für die Leistungskomponente, insbesondere den Leistungstransistor (4), insbesondere gegen das Eindringen von Feuchtigkeit und Leckflüssigkeit, ausgebildet.

8. Motor-Antriebs-Aggregat nach Anspruch 6 bzw. 7 mit dem Merkmal:
- Die Dichtung (10) bzw. die Wärmeleitfolie (4.2) ist an der Bürstentragplatte (1.1) fixierbar.

9. Motor-Antriebs-Aggregat nach zumindest einem der Ansprüche 1-8 mit dem Merkmal:
- Die Leistungskomponente, insbesondere der Leistungstransistor (4), ist mit einem motorgehäuseseitig in die Bürstentragplatte (1.1) eingespritzten Stanzgitter (9) kontaktiert bzw. fixiert.

10. Motor-Antriebs-Aggregat nach zumindest einem der vorhergehenden Ansprüche mit dem Merkmal:
- Die übrige Regel- bzw. Steuerschaltung(5.1-5-3) ist radial außen an dem Motorgehäuse (1) bzw. dem Antriebsgehäuse, insbesondere innerhalb eines gesonderten Elektronik-Gehäuses (3), angeordnet.

## Claims

1. Motor drive assembly, in particular motor pump assembly, for an automobile anti-blocking brake device, containing a motor housing (1) of a commutator motor, a drive housing, in particular pump housing (2), and a regulating or control circuit (4;5.1-5.3) with at least one power component, in particular a power transistor (4), with the features:
- the power component, in particular the power transistor (4), is arranged as separated in location from the remaining regulating or control circuit (5.1-5.3), with good heat conduction and close to the drive housing (2);
- the motor housing (1) is closely adjacent with an end shield to the drive housing (2) ;
- the end shield is constructed as a brush holding plate (1.1) of the commutator motor;
- the power component, in particular the power transistor (4), is placed with its base in direct or indirect heat-conducting connection with the drive housing on the side of the brush holding plate (1.1) facing the drive housing (2) and otherwise, by way of a sealed separation from the interior space of the motor housing (1), surrounded by the brush holding plate (1.1).

2. Motor drive assembly according to claim 1 with the feature:
- a pump housing (2) of a motor pump assembly of an automobile anti-blocking brake device is provided as drive housing.

3. Motor drive assembly according to claim 1 and/or 2 with the feature:
- the power component, in particular the power transistor (4), is directly adjacent with its base to the drive housing (2).

4. Motor drive assembly according to claim 1 and/or 2 with the feature:
- the power component, in particular the power transistor (4), is indirectly adjacent with its base to the drive housing (2).

5. Motor drive assembly according to claim 4 with the feature:
- the power component, in particular the power transistor (4), is adjacent to the drive housing (2) with an intermediate layer of a heat-conducting foil (4.2) or similar.

6. Motor drive assembly according to at least one of claims 1-5 with the feature:
- the power component, in particular the power transistor (4), is sealed on the outside edge by at least one seal (10), in particular against the penetration of moisture and leaking liquid.

7. Motor drive assembly according to claim 5 with the feature:
- the heat-conducting foil (4.2) is simultaneously constructed as a seal for the power component, in particular the power transistor (4), in particular against the penetration of moisture and leaking liquid.

8. Motor drive assembly according to claim 6 or 7 with the feature:
- the seal (10) or the heat-conducting foil (4.2) can be fixed to the brush holding plate (1.1).

9. Motor drive assembly according to at least one of claims 1-8 with the feature:
- the power component, in particular the power transistor (4), is contacted or fixed by a pressed screen (9) injected into the brush holding plate (1.1) on the side of the motor housing.

10. Motor drive assembly according to at least one of the preceding claims with the feature:
- the remaining regulating or control circuit (5.1-5.3) is arranged radially outside on the motor housing (1) or the drive housing, in particular inside a separate electronics housing (3).

## Revendications

1. Groupe moteur-dispositif d'entraînement, notamment groupe motopompe pour un dispositif de freinage antiblocage de véhicule automobile, comprenant un carter (1) de moteur, d'un moteur à collecteur, un corps de dispositif d'entraînement, notamment un corps (2) de pompe et un circuit (4 ; 5.1-5.3) de régulation et de commande ayant au moins un composant de puissance, notamment un transistor (4) de puissance, comprenant les caractéristiques :
- le composant de puissance, notamment le transistor (4) de puissance, est disposé d'une manière bien conductrice de la chaleur et à proximité du corps (2) du dispositif d'entraînement en étant séparé dans l'espace du reste du circuit (5.1-5.3) de régulation et de commande ;
- le carter (1) du moteur s'applique étroitement par un flasque formant palier au corps (2) du dispositif d'entraînement ;
- le flasque formant palier est constitué en plaque (1.1) porte-balais du moteur à collecteur ;
- le composant de puissance, notamment le transistor (4) de puissance, est, du côté de la plaque (1.1) porte-balais tourné vers le corps (2) du dispositif d'entraînement, mis par sa surface de base en liaison conductrice de la chaleur directe ou indirecte avec le corps du dispositif d'entraînement et sinon, en vue d'une séparation étanche vis-à-vis de l'intérieur du carter (1) de moteur, est entouré de la plaque (1.1) porte-balais.

2. Groupe moteur-dispositif d'entraînement suivant la revendication 1, ayant la caractéristique :
- il est prévu comme corps du dispositif d'entraînement un corps (2) de pompe d'un groupe motopompe d'un dispositif de freinage antiblocage de véhicule automobile.

3. Groupe moteur-dispositif d'entraînement suivant la revendication 1 et/ou 2 ayant la caractéristique :
- le composant de puissance, notamment le transistor (4) de puissance, s'applique par sa surface de base directement au corps (2) du dispositif d'entraînement.

4. Groupe moteur-dispositif d'entraînement suivant la revendication 1 et/ou 2, ayant la caractéristique :
- le composant de puissance, notamment le transistor (4) de puissance, s'applique par sa surface de base directement au corps (2) du dispositif d'entraînement.

5. Groupe moteur-dispositif d'entraînement suivant la revendication 4, ayant la caractéristique :
- le composant de puissance notamment le transistor (4) de puissance, s'applique au corps (2) du dispositif d'entraînement avec interposition d'une feuille (4.2) conductrice de la chaleur ou analogue.

6. Groupe moteur-dispositif d'entraînement suivant au moins l'une des revendications 1 à 5, ayant la caractéristique :
- le composant de puissance, notamment le transistor (4) de puissance, est rendu étanche du côté du bord extérieur par au moins une garniture (10) d'étanchéité empêchant notamment l'entrée d'humidité et de liquide de fuite.

7. Groupe moteur-dispositif d'entraînement suivant la revendication 5, ayant la caractéristique :
- la feuille (4.2) conductrice de la chaleur est constituée en même temps en tant que garniture d'étanchéité pour le composant de puissance, notamment le transistor (4) de puissance en empêchant notamment l'entrée d'humidité et de liquide de fuite.

8. Groupe moteur-dispositif d'entraînement suivant la revendication 6 ou 7, ayant la caractéristique :
- la garniture (10) d'étanchéité ou la feuille (4.2) conductrice de la chaleur peuvent être immobilisées sur la plaque (1.1) porte-balais.

9. Groupe moteur-dispositif d'entraînement suivant au moins l'une des revendications 1 à 8, ayant la caractéristique :
- le composant de puissance, notamment le transistor (4) de puissance, est mis en contact avec une grille (9) estampée, moulée par injection du côté du carter de moteur dans la plaque (1.1) porte-balais ou est immobilisé par celle-ci.

10. Groupe moteur-dispositif d'entraînement suivant au moins l'une des revendications précédentes, ayant la caractéristique :
- le reste du circuit (5.1-5.3) de régulation et de commande est monté radialement à l'extérieur du carter (1) de moteur ou du corps du dispositif d'entraînement, notamment dans un coffret (3) d'électronique distinct.
